# FASCICULE DE BREVET EUROPEEN

(11) **EP 4 348 483 B1**
(45) Date de publication et mention de la délivrance du brevet: **07.05.2025**
(21) Numéro de dépôt: 22730955.6
(22) Date de dépôt: 16.05.2022
(51) Int. Cl.: G06F 21/78, G06F 21/64

(54) **PROCÉDÉ DE GESTION D'UN REGISTRE LOCAL D'UN NOEUD APPARTENANT A UN ENSEMBLE DE NOEUDS CONTRIBUANT A UN REGISTRE DISTRIBUÉ**
VERFAHREN ZUR VERWALTUNG EINES LOKALEN KONTOS EINES ZU EINER MENGE VON KNOTEN, DIE ZU EINEM VERTEILTEN KONTO BEITRAGEN, GEHÖRENDEN KNOTENS
METHOD FOR MANAGING A LOCAL LEDGER OF A NODE BELONGING TO A SET OF NODES CONTRIBUTING TO A DISTRIBUTED LEDGER

(30) Priorité: 31.05.2021 FR 2105671
(43) Date de publication de la demande: 10.04.2024
(73) Titulaire: Orange, 92130 Issy-les-Moulineaux (FR)
(72) Inventeur: MESSIE, Vincent, 92326 CHÂTILLON CEDEX (FR); RADIER, Benoit, 92326 CHÂTILLON CEDEX (FR); FROMENTOUX, Gaël, 92326 CHÂTILLON CEDEX (FR); BRAUD, Arnaud, 92326 CHÂTILLON CEDEX (FR)
(74) Mandataire: Vidon Brevets & Stratégie
(86) Numéro de dépôt international: PCT/FR2022/050922
(87) Numéro de publication internationale: WO 2022/254117

(56) Documents cités:
- CN-A- 112 015 817
- GB-A- 2 587 541
- FLORIAN MARTIN ET AL: "Erasing Data from Blockchain Nodes", 2019 IEEE EUROPEAN SYMPOSIUM ON SECURITY AND PRIVACY WORKSHOPS (EUROS&PW), IEEE, 17 June 2019 (2019-06-17), pages 367 - 376, XP033599532, DOI: 10.1109/EUROSPW.2019.00047

## Description

### Domaine de l'invention

Le domaine de l'invention est celui des registres distribués. Plus précisément, l'invention concerne une solution de gestion des copies locales de ces registres distribués permettant de garantir la confiance et le consensus entre les différents nœuds impliqués dans la mise en œuvre d'un service tout en prenant en compte les contraintes de stockage inhérentes à une telle technologie.

### Art antérieur et ses inconvénients

Un registre distribué (en anglais *distributed ledger* ou *shared ledger*) est un registre simultanément enregistré et synchronisé dans une pluralité d'entités de communication, ou nœuds, appartenant à un ou plusieurs réseaux de communication. Un tel registre distribué voit son contenu évoluer uniquement par addition de nouvelles transactions préalablement validées par consensus par l'entièreté des nœuds dans lesquels le registre distribué est mémorisé. De telles transactions ne peuvent être, par principe, ni modifiées ni supprimées du registre distribué. Un registre distribué n'a ni administrateur central ni stockage de données centralisé. Enfin, un algorithme de consensus est nécessaire afin d'assurer le fonctionnement du registre distribué.

Bien que principalement connus pour leur utilisation dans le domaine des cryptomonnaies, les registres distribués sont également utilisés dans le domaine de l'exécution des contrats intelligents tels qu'introduits par le protocole d'échanges décentralisés Ethereum et sont par exemple utilisables dans des infrastructures de communication à partir desquelles sont proposés des services à valeur ajoutée.

De manière générale, dans les implémentations connues de registres distribués, et notamment les registres distribués utilisés dans le domaine des cryptomonnaies, l'intégralité des transactions liées au service rendu sont archivées dans les nœuds et accessibles grâce à des explorateurs implémentés sur certains nœuds dédiés à cet usage. Cela permet à quiconque à tout moment de vérifier l'authenticité et l'intégrité des transactions et par voie de faits de s'assurer que le service fourni est conforme.

En effet, la bonne exécution d'un registre distribué implique d'archiver et de mémoriser l'ensemble des transactions échangées dans chaque nœud contribuant à un service pour lequel les transactions sont enregistrées, afin de garantir la transparence et l'immuabilité des opérations s'y effectuant.

Cela pose un problème pour les nœuds ayant des capacités de stockage limitées, certains registres pouvant atteindre une taille importante et à terme pouvant causer l'impossibilité pour certains nœuds de pouvoir enregistrer de nouvelles transactions provoquant ainsi un problème de contrôle de l'exécution effective des opérations liées à ces transactions.

Il existe donc un besoin d'une solution permettant de répondre à ces problèmes de stockage limité de certains nœuds.

CN 112 015 817 divulgue un système dans lequel les données locales d'un noeud sont vidées suite à l'envoi d'une copie des données pour être stockée offline.

GB 2 587 541 divulgue la suppression du corps des blocs d'une chaîne de blocs tout en gardant les en-têtes des blocs.

Le document de FLORIAN MARTIN ET AL: "Erasing Data from Blockchain Nodes",2019 IEEE EUROPEAN SYMPOSIUM ON SECURITY AND PRIVACY WORKSHOPS (EUROS&PW), IEEE, 17 juin 2019 (2019-06-17), pages 367-376, propose une solution pragmatique pour supprimer certaines données d'une chaîne de blocs d'un noeud tout en permettant la participation du noeud dans les transactions de la chaîne.

### Exposé de l'invention

L'invention répond à ce besoin en proposant un procédé de gestion d'un registre local d'un nœud appartenant à un ensemble de nœuds contribuant à la mise en œuvre d'un service, ledit registre local mémorisant au moins une première transaction comprenant des données générées lors d'une exécution, par ledit nœud, d'une fonction contribuant à la mise en œuvre dudit service et au moins un paramètre prouvant la validité de la transaction et permettant d'ajouter ladite première transaction dans un registre distribué mémorisant la totalité des transactions relatives à la mise en œuvre dudit service, ledit procédé comprenant les étapes suivantes mises en œuvre par ledit nœud :
- réception d'un message comprenant une autorisation de vider le contenu du registre local, ledit message étant émis par un nœud, dit nœud archiviste, mémorisant dans son propre registre local une copie des transactions enregistrées dans le registre distribué,
- préalablement au vidage dudit registre local, enregistrement d'une copie d'un dernier état du registre local, et
- génération d'une deuxième transaction servant de transaction de référence aux transactions destinées à être mémorisées dans le registre local suite au vidage, les données comprises dans ladite deuxième transaction étant fonction de ladite copie du dernier état du registre local.

Une telle solution permet à certains nœuds impliqués dans la mise en œuvre d'un service de pouvoir vider leurs registres locaux sans que cela ne porte atteinte au bon fonctionnement du registre distribué associé. Ainsi, la transparence et l'immuabilité des transactions relatives audit service sont-elles garanties.

Plusieurs entités, telles que des fournisseurs de services ou des opérateurs en télécommunications par exemple, s'étant concertées pour fournir un service de bout en bout, peuvent alors exploiter des nœuds spécialisés, dit nœuds archivistes, chargés de mémoriser dans leurs registres locaux l'intégralité des transactions relatives à la mise en œuvre du service

Dans une telle solution, les entités impliquées sont en mesure de vider leurs registres locaux après avoir certifié l'intégrité de leur contenu par consensus, les avoir consolidés et ne plus en avoir besoin pour vérifier que le service a bien été délivré conformément aux spécifications négociées entre les entités préalablement à sa mise en œuvre. Le procédé permet en outre que des nœuds, ayant peu de capacités en termes de mémoire, puissent contribuer à un service et enregistrer des transactions liées à ce service en autorisant le vidage des ressources mémorisant les transactions via des nœuds archivistes dotés de capacités plus importantes. Cette possibilité est mise en œuvre tout en s'assurant qu'aucune donnée de transaction ne soit effacée ou non conservée dans un nœud, fût-il le nœud participant au service ou le nœud archiviste.

Selon une particularité du procédé de gestion objet de l'invention, celui-ci comprend une étape de vérification de l'authenticité dudit message comprenant une autorisation de vider le contenu du registre local au moyen d'une transaction de référence mémorisée dans le registre distribué, ladite transaction de référence comprenant au moins un identifiant d'au moins un nœud d'archivage autorisé.

Seul un message dûment authentifié peut déclencher un vidage du registre local évitant ainsi de porter atteinte à l'intégrité du registre distribué et de s'assurer que le vidage n'est pas exécuté suite à la réception d'un message frauduleux et ainsi éviter la corruption des données enregistrées ou l'effacement de celles-ci.

Selon une particularité du procédé de gestion objet de l'invention, le message comprenant une autorisation de vider le contenu du registre local est compris dans une transaction mémorisée dans le registre distribué.

Ainsi, une trace fiable des archivages successifs est accessible et permet de retracer un historique du registre distribué.

Selon une particularité du procédé de gestion objet de l'invention, celui-ci comprend une étape d'émission, à destination d'au moins un nœud archiviste, demandant une autorisation de vider un registre local.

Un nœud peut émettre un tel message par exemple si une limite de stockage de son registre local est atteinte, ou si des transactions relatives à la fonction exécutée par le nœud doivent être vidées du registre local pour des raisons de sécurité ou bien encore si le nœud termine ou est sur le point de terminer sa contribution au service.

Selon une particularité du procédé de gestion objet de l'invention, celui-ci comprend en outre :
- une étape de vérification d'au moins une condition de déclenchement du vidage dudit registre local, la vérification de ladite condition déclenchant la mise en œuvre de l'étape d'enregistrement d'une copie d'un dernier état du registre local.

La réception du message ne déclenche pas nécessairement le vidage du registre local. En effet, seuls certains nœuds peuvent avoir besoin de vider leur registre local. Ainsi, la possibilité de vider le registre local est-elle laissée à l'appréciation de chaque nœud en fonction de contraintes (mémoire, sécurité, architecture) qui lui sont propres.

Selon une particularité du procédé de gestion objet de l'invention, ledit message comprenant une autorisation de vider le contenu du registre local comprend également un identifiant de ladite fonction.

Ainsi, le vidage du registre local peut ne concerner que certaines transactions qui y sont mémorisées. Il est ainsi possible de prévoir que seulement certaines données, relatives à une fonction et possiblement à un service donné, soient mémorisées par le nœud archiviste à un instant donné.

Selon une particularité du procédé de gestion objet de l'invention, la réception dudit message comprenant une autorisation de vider le contenu du registre local déclenche l'exécution d'une fonction d'archivage conduisant au vidage dudit registre local.

Selon une particularité du procédé de gestion objet de l'invention, ladite fonction d'archivage exécutée par ledit nœud est un contrat intelligent.

L'invention concerne également un procédé de gestion d'un registre distribué mémorisant la totalité des transactions relatives à un service mis en œuvre par un ensemble de nœuds, un nœud exécutant au moins une fonction contribuant à la mise en œuvre dudit service et comprenant un registre local mémorisant au moins une première transaction comprenant des données générées lors d'une exécution de ladite fonction et au moins un paramètre prouvant la validité de la transaction et permettant d'ajouter ladite première transaction dans le registre distribué, ledit procédé comprenant les étapes suivantes mises en œuvre par un nœud, dit nœud archiviste, mémorisant dans son propre registre local une copie du registre distribué :
- détection d'un évènement déclencheur relatif au registre distribué,
- en réponse à la détection dudit événement déclencheur, diffusion, à destination des nœuds contribuant à la mise en œuvre dudit service, d'un message comprenant une autorisation de vider le contenu du registre local desdits nœuds,
- mémorisation, dans son propre registre local, d'une nouvelle transaction de référence des nœuds ayant vidé leur registre local.

Un tel nœud archiviste assure la bonne gestion du registre distribué en faisant en sorte que toutes les transactions relatives à un service donné soit mémorisées dans le registre distribué et en s'assurant que chaque nœud impliqué dans la mise en œuvre du service soit en capacité de : à la fois garantir la transparence et l'immuabilité des transactions relatives audit service et à la fois gérer au mieux les capacités de stockage de son registre local.

Selon une particularité du procédé de gestion d'un registre distribué objet de l'invention, l'événement déclencheur appartient au groupe comprenant entre autres :
- un intervalle de temps régulier,
- la réception d'un message, émis par au moins l'un des nœuds, demandant une autorisation de vider un registre local,
- un horaire,
- un nombre de transactions mémorisées dans le registre distribué,
- un volume limite de stockage,
- une mise à jour de la fonction à exécuter,
- l'ajout d'un nœud à l'ensemble de nœuds,
- la suppression d'un nœud à l'ensemble de nœuds,
- l'ajout d'un nœud archiviste,
- la suppression d'un nœud archiviste.

L'invention concerne également un nœud appartenant à un ensemble de nœuds contribuant à la mise en œuvre d'un service, et comprenant un registre local mémorisant au moins une première transaction comprenant des données générées lors d'une exécution, par ledit nœud, d'une fonction contribuant à la mise en œuvre dudit service et au moins un paramètre prouvant la validité de la transaction et permettant d'ajouter ladite première transaction dans un registre distribué mémorisant la totalité des transactions relatives à la mise en œuvre dudit service, ledit nœud comprenant des moyens pour :
- recevoir un message comprenant une autorisation de vider le contenu du registre local, ledit message étant émis par un nœud, dit nœud archiviste, mémorisant dans son propre registre local une copie des transactions enregistrées dans le du registre distribué,
- préalablement au vidage dudit registre local, enregistrer une copie d'un dernier état du registre local, et
- générer une deuxième transaction servant de transaction de référence aux transactions destinées à être mémorisées dans le registre local suite au vidage, les données comprises dans ladite deuxième transaction étant fonction de ladite copie du dernier état du registre local.

L'invention concerne encore un nœud archiviste mémorisant dans son propre registre local une copie d'un registre distribué mémorisant la totalité des transactions relatives à un service mis en œuvre par un ensemble de nœuds, un nœud exécutant au moins une fonction contribuant à la mise en œuvre dudit service et comprenant un registre local mémorisant au moins une première transaction comprenant des données générées lors d'une exécution de ladite fonction et au moins un paramètre prouvant la validité de la transaction et permettant d'ajouter ladite première transaction dans le registre distribué, ledit nœud archiviste comprenant des moyens pour :
- détecter un évènement déclencheur relatif au registre distribué,
- en réponse à la détection dudit événement déclencheur, diffuser, à destination des nœuds contribuant à la mise en œuvre dudit service, un message comprenant une autorisation de vider le contenu du registre local desdits nœuds,
- mémoriser, dans son propre registre local, une nouvelle transaction de référence des nœuds ayant vidé leur registre local.

L'invention concerne enfin des produits programme d'ordinateur comprenant des instructions de code de programme pour la mise en œuvre des procédés tels que décrits précédemment, lorsqu'ils sont exécutés par un processeur.

L'invention vise également un support d'enregistrement lisible par un ordinateur sur lequel sont enregistrés des programmes d'ordinateur comprenant des instructions de code de programme pour l'exécution des étapes des procédés selon l'invention tels que décrits ci-dessus.

Un tel support d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que les programmes d'ordinateur qu'il contient sont exécutables à distance. Les programmes selon l'invention peuvent être en particulier téléchargés sur un réseau par exemple le réseau Internet.

Alternativement, le support d'enregistrement peut être un circuit intégré dans lequel les programmes sont incorporés, le circuit étant adapté pour exécuter ou pour être utilisé dans l'exécution des procédés objets de l'invention précités.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig.1] : cette figure représente un système dans lequel les procédés de gestion objet de la présente invention sont mis en œuvre,
[Fig.2] : cette figure représente les différentes étapes des procédés de gestion mis en œuvre par les différents nœuds impliqués dans la mise en œuvre du service,
[Fig.3] : cette figure représente un nœud selon un mode de réalisation de l'invention,
[Fig.4] : cette figure représente un nœud archiviste selon un mode de réalisation de l'invention.

### Description détaillée de modes de réalisation de l'invention

Le principe général de l'invention repose sur l'instanciation de nœuds archivistes mémorisant dans leur registre local l'intégralité des transactions relatives à une fonction exécutée par un nœud appartenant à un ensemble de nœuds impliqués dans la mise en œuvre d'un service.

Un tel nœud archiviste autorise, en fonction des circonstances, les nœuds concernés à vider tout ou partie des transactions mémorisées dans leurs registres locaux afin notamment de libérer de l'espace de stockage.

Une telle solution présente en outre l'avantage de maintenir la transparence et l'immuabilité des transactions relatives audit service et ainsi permettre de continuer à offrir le service conforment aux conditions proposées et acceptées par des utilisateurs du service.

La solution objet de la présente invention permet donc de bénéficier des avantages des registres distribués, à savoir la sécurité quant à l'authenticité et l'intégrité des transactions sans autorité de contrôle, sans risquer de causer l'impossibilité pour certains nœuds de pouvoir enregistrer de nouvelles transactions provoquant ainsi un problème de contrôle de l'exécution effective des opérations liées à ces transactions.

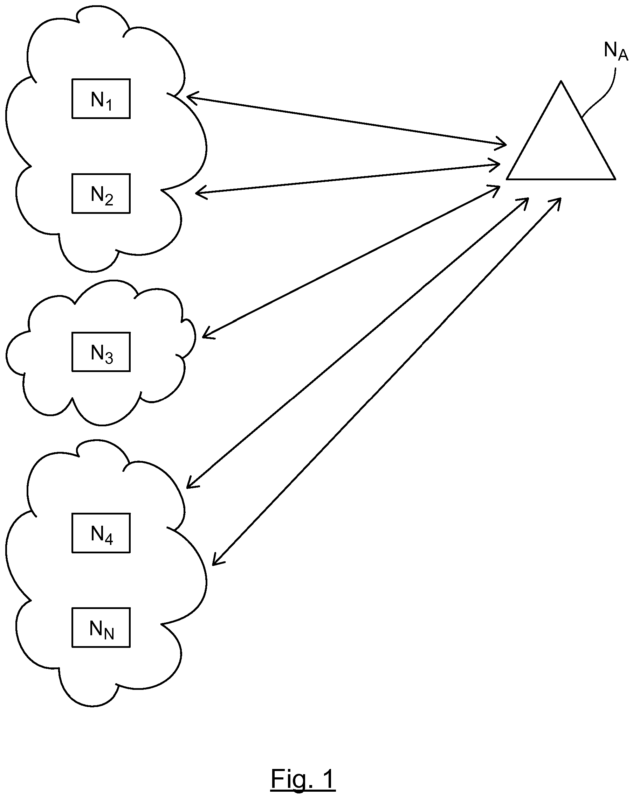

On présente désormais, en relation avec la [Fig.1] représente un système dans lequel les procédés de gestion objet de la présente invention sont mis en œuvre.

Un tel système comprend une pluralité de nœuds N₁-N_{N} et un nœud archiviste N_{A}. Bien entendu, un tel système peut comprendre plusieurs nœuds archivistes N_{A}.

Les nœuds N₁-N_{N} peuvent être de façon non exclusive des équipements de communication tels que des serveurs, des routeurs, des stations de bases telles que des eNodeB conformément à la 4G ou des gNB en 5G, des passerelles interconnectant différents réseaux de communications, des terminaisons de lignes optiques ou OLT (*Optical Termination Lines*), voire des terminaux fixes ou mobiles contribuant à la mise en œuvre d'un service, etc. De tels nœuds N₁-N_{N} peuvent appartenir à un même réseau de communications géré par un premier opérateur en télécommunications ou peuvent appartenir à différents réseaux de communications, gérés ou non, par différents opérateurs en télécommunications. De tels équipements de communication possèdent des moyens de stockage leur permettant de mémoriser dans un registre local dédié un ensemble de transactions effectuées par ledit nœud et liées à la mise en œuvre d'un ou plusieurs service(s) donné(s).

Tout comme les nœuds N₁-N_{N}, le nœud archiviste N_{A} est un équipement de communication. Il peut lui-même contribuer effectivement ou non à la fourniture du service et/ou bien être un nœud spécifiquement destiné à l'archivage de données de transactions pour un ou plusieurs nœuds contribuant à la fourniture d'un service de communication pour lequel des transactions doivent être sauvegardées. La seule contrainte à laquelle doit satisfaire un tel équipement de communication est d'avoir une capacité de stockage suffisamment grande pour permettre la mémorisation d'une copie d'un registre distribué mémorisant l'intégralité des transactions effectuées par lesdits nœuds N₁-N_{N} liées à la mise en œuvre du service. Il est également possible d'imaginer que des nœuds en charge de l'archivage de données aient eux-mêmes besoin d'archiver à certains moments leurs données auprès de nœuds archivistes ayant plus de capacités de stockage.

Dans le présent document, le terme transaction se réfère à une entrée d'un registre distribué relatif à un service donné. Une transaction est typiquement le résultat de l'exécution d'une fonction, telle que l'émission, la réception, un traitement spécifique de données du service, exécutée par un nœud participant à la mise en œuvre d'un service donné. Une telle transaction est validée par l'ensemble des nœuds participants selon des règles définies au préalable par l'ensemble des entités, telles que les opérateurs en télécommunications et/ou les fournisseurs de services, gérant les nœuds participants et le service. Puis la transaction est figée grâce à des primitives cryptographiques avant d'être ajoutée au registre distribué.

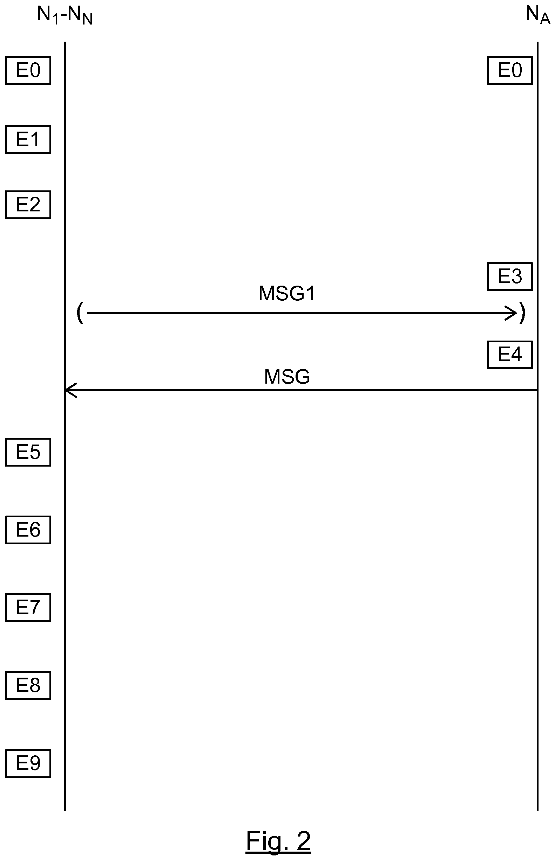

La [Fig.2] représente les différentes étapes des procédés de gestion mis en œuvre par les différents nœuds N₁-N_{N}, N_{A}, impliqués dans la mise en œuvre du service.

Préalablement à la mise en œuvre des différentes étapes des procédés de gestion, différentes entités, telles que des opérateurs en télécommunications et/ou des fournisseurs de services ou de contenus, s'accordent sur des conditions de mises en œuvre d'un service tel qu'un service de connectivité de bout en bout.

Ainsi, une pluralité de nœuds N₁-N_{N} appartenant aux différentes entités échangent des données de manière sécurisée, au moyen de transactions, afin de s'assurer de la mise en œuvre du service en collectant et en traitent des données associées à différentes fonctions exécutées par les différents nœuds N₁-N_{N}.

De telles fonctions peuvent prendre la forme de contrats intelligents qui permettent de certifier l'intégrité des données produites lors de leur exécution par un nœud. Les données produites sont alors échangées, puis enregistrées sous forme de transactions qui sont alors archivées dans le registre distribué.

Les différentes entités se mettent également d'accord sur une procédure d'archivage des transactions commune à l'ensemble des nœuds N₁-N_{N} permettant à ces derniers de vider, partiellement ou non, l'historique de transactions mémorisées dans leur registre local afin de libérer de l'espace de stockage.

Pour cela, au moins un nœud archiviste N_{A} est désigné par les entités préalablement à la mise en œuvre du service. De nouveaux nœuds archivistes N_{A} peuvent être désignés pendant la mise en œuvre du service, de même que certains nœuds archivistes peuvent cesser d'être utilisés comme tels. Des nœuds archivistes peuvent en outre être affectés à la sauvegarde de données pour certains types de services ou pour des transactions spécifiques ou bien encore lorsque certains types de données doivent être sauvegardés dans un nœud archiviste N_{A} par exemple pour prendre en compte des impératifs de sécurité.

Les entités décident également de l'instanciation d'une fonction d'archivage, destinées à être exécutée par les nœuds N₁-N_{N} et les nœuds archivistes N_{A}. Une telle fonction d'archivage correspond aux procédés de gestion objet de l'invention.

Dans une étape E0, une fonction d'archivage liée à un service est fournie à l'ensemble des nœuds N₁-N_{N} et des nœuds archivistes N_{A} impliqués dans la mise en œuvre d'un service donné et dans la gestion du registre distribué qui lui est associé. Parmi les paramètres de cette fonction d'archivage se trouve un identifiant du nœud archiviste N_{A}.

Une liste des nœuds archiviste N_{A} est établie en amont par les entités impliquées dans la fourniture du service, et peut comprendre des nœuds archivistes N_{A} appartenant à un tiers de confiance comme une autorité régulatrice ou un auditeur, ou à l'une ou l'autre des entités. Une transaction de validation de la fonction d'archivage est alors enregistrée dans le registre distribué. Une telle transaction fixe les conditions de l'exécution de cette fonction d'archivage et sert, par la suite, de transaction de référence par l'ensemble ou une partie des nœuds N₁-N_{N} lorsqu'ils mettent en œuvre la fonction d'archivage.

La présence de cet identifiant du nœud d'archivage N_{A} permet aux nœuds N₁-N_{N} d'authentifier le nœud archiviste N_{A} de manière sécurisée.

Ainsi, dans un exemple d'implémentation, un nœud parmi les nœuds N₁-N_{N} est configuré pour instancier la fonction d'archivage devenant alors un nœud archiviste N_{A} . Ce nœud archiviste N_{A} transmet son identifiant aux autres nœuds N₁-N_{N} afin que cette information puisse être utilisée pour identifier la fonction d'archivage lors de l'exécution de la fonction d'archivage.

Dans un autre exemple d'implémentation, la fonction d'archivage peut aussi être déployée dans un environnement centralisé et sécurisé tel qu'un nœud Gaia-X, un connecteur de l'IDSA, ou encore un cloud sécurisé, accessible par les différents nœuds N₁-N_{N}. Afin de pouvoir accéder à la fonction afin de l'exécuter, un identifiant de la fonction d'archivage telle qu'une adresse de contrat Ethereum, est fournie aux nœuds N₁-N_{N} et mémorisée dans le registre local de ces nœuds.

Dans une étape E1, les nœuds N₁-N_{N} exécutent au moins une fonction relative à la mise en œuvre du service proposé par les entités. L'exécution de cette fonction par un nœud N_{N} génère des données, ou « Usage Report », destinées à être partagées avec au moins un autre nœud N₁-N_{N} contribuant à la mise en œuvre du service.

Les données ainsi obtenues sont échangées avec les nœuds N₁-N_{N} concernés sous forme de transaction. Ainsi, dans une étape E2, une fois la transaction validée par l'ensemble des nœuds N₁-N_{N} et figée grâce à des primitives cryptographiques, elle est mémorisée dans le registre local du nœud N_{N} avant d'être ajoutée au registre distribué.

Une telle transaction comprend, entre autres, des données propres à la technologie de registre utilisée, un identifiant d'un nœud émettant ladite transaction assorti d'une signature numérique pour authentifier ce dernier, un identifiant d'un destinataire de ladite transaction, tel qu'un un autre nœud ou un contrat intelligent tel que le contrat intelligent correspondant à la fonction d'archivage, un paramètre permettant de prouver la validité de la transaction, tel que le résultat d'un calcul cryptographique, des paramètres permettant de chainer la transaction aux transactions précédentes tels qu'un hash d'un bloc comprenant une pluralité de transactions antérieures, etc.

Dans une étape E3, le nœud archiviste N_{A} collecte les transactions ajoutées au registre distribué par les nœuds N₁-N_{N} afin de les archiver et ainsi assurer leur préservation selon des termes édictés au préalable par les entités fournissant le service. Une telle collecte peut être effectuée de manière continue, à intervalles de temps réguliers, ou en réponse à un événement particulier tel que la réception d'un message émis par l'un des nœuds N₁-N_{N} informant, par exemple, de la génération ou de la validation d'une nouvelle transaction. Ainsi, le nœud archiviste dispose d'une copie, à jour, du registre distribué mémorisé dans son registre local.

Dans une étape E4, le nœud archiviste N_{A} diffuse à destination de l'ensemble des nœuds N₁-N_{N} un message MSG comprenant une autorisation de vider le contenu du registre local des nœuds N₁-N_{N}. Dans un mode de réalisation particulier, le message MSG est compris dans une transaction mémorisée dans le registre distribué. Ainsi, le registre distribué comprend des traces des demandes d'archivage successives ce qui permet d'avoir un historique précis des actions de gestion effectuées sur le registre distribué.

L'émission d'un tel message MSG peut être déclenchée par différents événements.

Ainsi, un tel message MSG peut êtes émis à intervalle de temps régulier, par exemple toutes les 30 secondes, à un horaire particulier, et/ou lorsqu'un nombre de transactions mémorisées dans le registre distribué a été atteint, par exemple toutes les 1000 transactions, et/ou lorsqu'un volume de stockage limite est atteint, par exemple lorsque le volume de transactions mémorisées atteint un To (téraoctets), et/ou lorsqu'une mise à jour de la fonction à exécuter est disponible, et/ou en cas d'ajout d'un nœud N_{M} à l'ensemble de nœuds N1-N_{N}, et/ou en cas de suppression d'un nœud à l'ensemble de nœuds N₁-N_{N}, et/ou en cas d'ajout ou de suppression d'un nœud archiviste, etc.

Dans un mode de réalisation particulier, l'émission du message MSG est déclenchée par la réception d'un message MSG1 demandant au nœud archiviste une autorisation de vider un registre local. Le message MSG1 est émis par un nœud N₁-N_{N} par exemple en réponse à la détection de l'atteinte d'un volume de stockage limite dudit registre local ou bien pour un problème de sécurité ou de disponibilité susceptible d'effacer certaines données du registre. Dans ce mode de réalisation, le nœud archiviste N_{A} peut procéder à une vérification de l'authenticité dudit message MSG1. Pour cela le nœud N _{A} utilise, par exemple, une transaction antérieure générée par le nœud N₁-N_{N} ayant émis le message MSG1 et mémorisée dans le registre distribué.

Le message MSG émis par le nœud archiviste N_{A} comprend entre autres un identifiant de la fonction relative au service rendu permettant aux nœuds N₁-N_{N} de déterminer quelles transactions mémorisées dans leur registre local font l'objet de la procédure d'archivage.

Suite à la réception du message MSG, dans une étape E5, le nœud N_{N} procède selon un exemple à une vérification de l'authenticité dudit message MSG. Pour cela le nœud N_{N} utilise la transaction de référence définie au cours de l'étape E0 et mémorisée dans le registre distribué.

Une fois l'authenticité du message MSG vérifiée, le nœud N_{N} détermine, dans une étape E6, si les conditions de vidage de son registre local sont remplies ou pas. Une telle condition est par exemple l'atteinte d'un volume de stockage limite du registre local du nœud N_{N}, ou un nombre de transactions relatives à une fonction donnée limite, ou encore l'expiration d'une durée de mémorisation limite, par exemple ne pas conserver une transaction en mémoire plus de 48h.

Si une ou plusieurs conditions de vidage sont remplies, le nœud N_{N} procède alors à l'enregistrement d'une copie d'un dernier état de son registre local dans une étape E7.

Ainsi, toutes les données mémorisées dans le registre local antérieurement à l'enregistrement de ce dernier état du registre local peuvent être supprimées libérant du volume de stockage.

Cet enregistrement est à la fois mémorisé dans le registre local du nœud N_{N} et, optionnellement, dans le registre distribué une fois validé par l'ensemble des nœuds N₁-N _{N} dans une étape E8.

Une telle copie d'un dernier état du registre local du nœud N_{N} constitue les données d'une transaction de référence TR pour les transactions relatives à la fonction exécutée par le nœud N_{N} destinées à être mémorisées dans le registre local suite au vidage de ce dernier.

Ainsi, bien qu'ayant vidé son registre local, le nœud N_{N} peut toujours contribuer au registre distribué et assurer la transparence et la traçabilité des transactions relatives à la mise en œuvre du service fourni.

Dans une étape E9, le nœud N_{N} procède au vidage total ou partiel de son registre local.

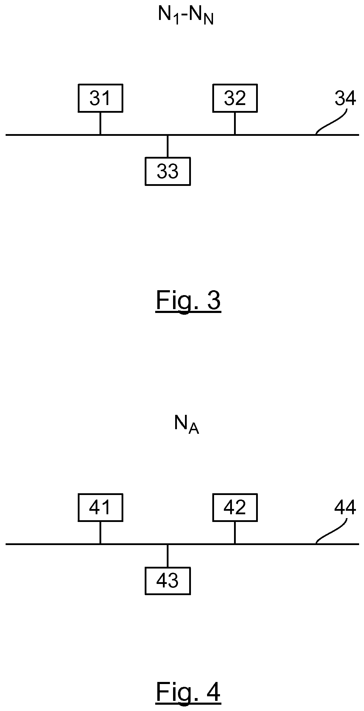

La [Fig.3] représente un nœud N₁-N_{N} selon un mode de réalisation de l'invention. Un tel nœud N₁-N_{N} est apte à mettre en œuvre les différents modes de réalisation du procédé de gestion d'un registre local selon la [Fig.2].

Un nœud N₁-N_{N} peut comprendre au moins un processeur matériel 31, une unité de stockage 32, et au moins une interface de réseau 33 qui sont connectés entre eux au travers d'un bus 34. Bien entendu, les éléments constitutifs du nœud N₁-N_{N} peuvent être connectés au moyen d'une connexion autre qu'un bus.

Le processeur 31 commande les opérations du nœud N₁-N_{N}.L'unité de stockage 32 stocke au moins un programme pour la mise en œuvre du procédé selon un mode de réalisation de l'invention à exécuter par le processeur 31, et diverses données, telles que des paramètres utilisés pour des calculs effectués par le processeur 31, des données intermédiaires de calculs effectués par le processeur 31, etc. Le processeur 31 peut être formé par tout matériel ou logiciel connu et approprié, ou par une combinaison de matériel et de logiciel. Par exemple, le processeur 31 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 32 peut être formée par n'importe quel moyen approprié capable de stocker le programme ou les programmes et des données d'une manière lisible par un ordinateur. Des exemples d'unité de stockage 32 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

L'interface réseau 33 fournit une connexion entre le nœud N₁-N_{N} et d'autres nœuds N ₁-N₃ et au moins un nœud archiviste N_{A}.

La [Fig.4] représente un nœud archiviste N_{A} selon un mode de réalisation de l'invention. Un tel nœud archiviste N_{A} est apte à mettre en œuvre les différents modes de réalisation du procédé de gestion d'un registre distribué selon la [Fig.2].

Un nœud archiviste N_{A} peut comprendre au moins un processeur matériel 41, une unité de stockage 42, et au moins une interface de réseau 43 qui sont connectés entre eux au travers d'un bus 44. Bien entendu, les éléments constitutifs du nœud archiviste N_{A} peuvent être connectés au moyen d'une connexion autre qu'un bus.

Le processeur 41 commande les opérations du nœud archiviste N_{A}. L'unité de stockage 42 stocke au moins un programme pour la mise en œuvre du procédé selon un mode de réalisation de l'invention à exécuter par le processeur 41, et diverses données, telles que des paramètres utilisés pour des calculs effectués par le processeur 41, des données intermédiaires de calculs effectués par le processeur 41, etc. Le processeur 41 peut être formé par tout matériel ou logiciel connu et approprié, ou par une combinaison de matériel et de logiciel. Par exemple, le processeur 31 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 42 peut être formée par n'importe quel moyen approprié capable de stocker le programme ou les programmes et des données d'une manière lisible par un ordinateur. Des exemples d'unité de stockage 42 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

L'interface réseau 43 fournit une connexion entre le nœud archiviste N_{A}, des nœuds N ₁-N_{N} et au moins un autre nœud archiviste N_{A}.

## Revendications

1. Procédé de gestion d'un registre local d'un nœud appartenant à un ensemble de nœuds contribuant à la mise en œuvre d'un service, ledit registre local mémorisant au moins une première transaction comprenant des données générées lors d'une exécution, par ledit nœud, d'une fonction contribuant à la mise en œuvre dudit service et au moins un paramètre prouvant la validité de la transaction et permettant d'ajouter ladite première transaction dans un registre distribué mémorisant la totalité des transactions relatives à la mise en œuvre dudit service, ledit procédé comprenant les étapes suivantes mises en œuvre par ledit nœud :
- réception d'un message comprenant une autorisation de vider le contenu du registre local, ledit message étant émis par un nœud, dit nœud archiviste, mémorisant dans son propre registre local une copie des transactions enregistrées dans le registre distribué,
- préalablement au vidage dudit registre local, enregistrement d'une copie d'un dernier état du registre local, et
- génération d'une deuxième transaction servant de transaction de référence aux transactions destinées à être mémorisées dans le registre local suite au vidage, les données comprises dans ladite deuxième transaction étant fonction de ladite copie du dernier état du registre local.

2. Procédé de gestion selon la revendication 1 comprenant une étape de vérification de l'authenticité dudit message comprenant une autorisation de vider le contenu du registre local au moyen d'une transaction de référence mémorisée dans le registre distribué, ladite transaction de référence comprenant au moins un identifiant d'au moins un nœud d'archivage autorisé.

3. Procédé de gestion selon la revendication 1 comprenant une étape d'émission, à destination d'au moins un nœud archiviste, demandant une autorisation de vider un registre local.

4. Procédé de gestion selon la revendication 3 dans lequel ledit message demandant une autorisation de vider un registre local est émis en réponse à la détection de l'atteinte d'un volume de stockage limite dudit registre local.

5. Procédé de gestion selon la revendication 1, dans lequel le message comprenant une autorisation de vider le contenu du registre local est compris dans une transaction mémorisée dans le registre distribué.

6. Procédé de gestion selon la revendication 1 comprenant en outre :
- une étape de vérification d'au moins une condition de déclenchement du vidage dudit registre local, la vérification de ladite condition déclenchant la mise en œuvre de l'étape d'enregistrement d'une copie d'un dernier état du registre local.

7. Procédé de gestion selon la revendication 1 dans lequel ledit message comprenant une autorisation de vider le contenu du registre local comprend également un identifiant de ladite fonction.

8. Procédé de gestion selon l'une quelconque des revendications 1 à 3 dans lequel, la réception dudit message comprenant une autorisation de vider le contenu du registre local déclenche l'exécution d'une fonction d'archivage conduisant au vidage dudit registre local.

9. Procédé de gestion selon la revendication 8 dans lequel ladite fonction d'archivage exécutée par ledit nœud est un contrat intelligent.

10. Procédé de gestion d'un registre distribué mémorisant la totalité des transactions relatives à un service mis en œuvre par un ensemble de nœuds, un nœud exécutant au moins une fonction contribuant à la mise en œuvre dudit service et comprenant un registre local mémorisant au moins une première transaction comprenant des données générées lors d'une exécution de ladite fonction et au moins un paramètre prouvant la validité de la transaction et permettant d'ajouter ladite première transaction dans le registre distribué, ledit procédé comprenant les étapes suivantes mises en œuvre par un nœud, dit nœud archiviste, mémorisant dans son propre registre local une copie du registre distribué :
- détection d'un évènement déclencheur relatif au registre distribué,
- en réponse à la détection dudit événement déclencheur, diffusion, à destination des nœuds contribuant à la mise en œuvre dudit service, d'un message comprenant une autorisation de vider le contenu du registre local desdits nœuds,
- mémorisation, dans son propre registre local, d'une nouvelle transaction de référence des nœuds ayant vidé leur registre local.

11. Procédé de gestion d'un registre distribué selon la revendication 10, dans lequel l'événement déclencheur appartient au groupe comprenant entre autres :
- un intervalle de temps régulier,
- la réception d'un message, émis par au moins l'un des nœuds, demandant une autorisation de vider un registre local,
- un horaire,
- un nombre de transactions mémorisées dans le registre distribué,
- un volume limite de stockage ,
- une mise à jour de la fonction à exécuter,
- l'ajout d'un nœud à l'ensemble de nœuds ,
- la suppression d'un nœud à l'ensemble de nœuds,
- l'ajout d'un nœud archiviste,
- la suppression d'un nœud archiviste.

12. Nœud appartenant à un ensemble de nœuds contribuant à la mise en œuvre d'un service, et comprenant un registre local mémorisant au moins une première transaction comprenant des données générées lors d'une exécution, par ledit nœud, d'une fonction contribuant à la mise en œuvre dudit service et au moins un paramètre prouvant la validité de la transaction et permettant d'ajouter ladite première transaction dans un registre distribué mémorisant la totalité des transactions relatives à la mise en œuvre dudit service, ledit nœud comprenant des moyens pour :
- recevoir un message comprenant une autorisation de vider le contenu du registre local, ledit message étant émis par un nœud, dit nœud archiviste, mémorisant dans son propre registre local une copie des transactions enregistrées dans le du registre distribué,
- préalablement au vidage dudit registre local, enregistrer une copie d'un dernier état du registre local, et
- générer une deuxième transaction servant de transaction de référence aux transactions destinées à être mémorisées dans le registre local suite au vidage, les données comprises dans ladite deuxième transaction étant fonction de ladite copie du dernier état du registre local.

13. Nœud archiviste mémorisant dans son propre registre local une copie d'un registre distribué mémorisant la totalité des transactions relatives à un service mis en œuvre par un ensemble de nœuds, un nœud exécutant au moins une fonction contribuant à la mise en œuvre dudit service et comprenant un registre local mémorisant au moins une première transaction comprenant des données générées lors d'une exécution de ladite fonction et au moins un paramètre prouvant la validité de la transaction et permettant d'ajouter ladite première transaction dans le registre distribué, ledit nœud archiviste comprenant des moyens pour :
- détecter un évènement déclencheur relatif au registre distribué,
- en réponse à la détection dudit événement déclencheur, diffuser, à destination des nœuds contribuant à la mise en œuvre dudit service, un message comprenant une autorisation de vider le contenu du registre local desdits nœuds,
- mémoriser, dans son propre registre local, une nouvelle transaction de référence des nœuds ayant vidé leur registre local.

14. Produit programme d'ordinateur comprenant des instructions de code de programme pour la mise en œuvre d'un procédé selon la revendication 1, lorsqu'il est exécuté par un processeur.

15. Produit programme d'ordinateur comprenant des instructions de code de programme pour la mise en œuvre d'un procédé selon la revendication 10, lorsqu'il est exécuté par un processeur.

## Patentansprüche

1. Verfahren zur Verwaltung eines lokalen Kontos eines Knotens, der zu einem Knotensatz gehört, der zur Implementierung eines Dienstes beiträgt, wobei das lokale Konto mindestens eine erste Transaktion hinterlegt, die Daten umfasst, die bei der Ausführung einer Funktion durch den Knoten erzeugt werden, die zur Implementierung des Dienstes beiträgt, und mindestens einen Parameter, der die Gültigkeit der Transaktion nachweist und es ermöglicht, die erste Transaktion in ein verteiltes Konto hinzuzufügen, das alle Transaktionen in Bezug auf die Implementierung des Dienstes hinterlegt, wobei das Verfahren die folgenden Schritte umfasst, die von dem Knoten implementiert werden:
- Empfang einer Nachricht, die eine Berechtigung zum Leeren des Inhalts des lokalen Kontos umfasst, wobei die Nachricht von einem Knoten, dem sogenannten Archivierungsknoten, gesendet wird, der in seinem eigenen lokalen Konto eine Kopie der in dem verteilten Konto gespeicherten Transaktionen hinterlegt,
- vor dem Leeren des lokalen Kontos Speichern einer Kopie eines letzten Status des lokalen Kontos und
- Erzeugung einer zweiten Transaktion, die als Bezugstransaktion für die Transaktionen dient, die nach dem Leeren in dem lokalen Konto hinterlegt werden sollen, wobei die in dieser zweiten Transaktion umfassten Daten von dieser Kopie des letzten Status des lokalen Kontos abhängen.

2. Verwaltungsverfahren nach Anspruch 1, das einen Schritt zur Überprüfung der Authentizität der Nachricht umfasst, die eine Berechtigung zum Leeren des Inhalts des lokalen Kontos mittels einer in dem verteilten Konto hinterlegten Bezugstransaktion umfasst, wobei die Bezugstransaktion mindestens eine Kennung von mindestens einem berechtigten Archivierungsknoten umfasst.

3. Verwaltungsverfahren nach Anspruch 1, das einen Schritt umfasst, bei dem an mindestens einen Archivierungsknoten gesendet wird, eine Berechtigung zum Leeren eines lokalen Kontos anfordernd.

4. Verwaltungsverfahren nach Anspruch 3, bei dem die Nachricht, in der eine Berechtigung zum Leeren eines lokalen Kontos angefordert wird, als Antwort auf die Erkennung des Erreichens eines Grenzwerts für das Speichervolumen des lokalen Kontos gesendet wird.

5. Verwaltungsverfahren nach Anspruch 1, bei dem die Nachricht, die eine Berechtigung zum Leeren des Inhalts des lokalen Kontos umfasst, in einer in dem verteilten Konto hinterlegten Transaktion umfasst ist.

6. Verwaltungsverfahren nach Anspruch 1, ferner umfassend:
- einen Schritt zur Überprüfung mindestens einer Bedingung für das Auslösen der Entleerung des lokalen Kontos, wobei die Überprüfung der Bedingung die Implementierung des Schritts zum Speichern einer Kopie eines letzten Status des lokalen Kontos auslöst.

7. Verwaltungsverfahren nach Anspruch 1, bei dem die Nachricht, die eine Berechtigung zum Leeren des Inhalts des lokalen Kontos umfasst, auch eine Kennung der Funktion umfasst.

8. Verwaltungsverfahren nach einem der Ansprüche 1 bis 3, bei dem der Empfang der Nachricht, die eine Berechtigung zum Leeren des Inhalts des lokalen Kontos umfasst, die Ausführung einer Archivierungsfunktion auslöst, die zum Leeren des lokalen Kontos führt.

9. Verwaltungsverfahren nach Anspruch 8, bei dem die von dem Knoten ausgeführte Archivierungsfunktion ein intelligenter Vertrag ist.

10. Verwaltungsverfahren eines verteilten Kontos, das alle Transaktionen hinterlegt, die sich auf einen von einem Knotensatz implementierten Dienst beziehen, wobei ein Knoten mindestens eine Funktion ausführt, die zur Implementierung des Dienstes beiträgt, und ein lokales Konto umfasst, das mindestens eine erste Transaktion hinterlegt, die Daten umfasst, die bei der Ausführung der Funktion erzeugt werden, und mindestens einen Parameter, der die Gültigkeit der Transaktion nachweist und es ermöglicht, die erste Transaktion in das verteilte Konto hinzuzufügen, wobei das Verfahren die folgenden Schritte umfasst, die von einem Knoten, dem sogenannten Archivierungsknoten, implementiert werden, der in seinem eigenen lokalen Konto eine Kopie des verteilten Kontos hinterlegt:
- Erkennung eines auslösenden Ereignisses in Bezug auf das verteilte Konto,
- in Antwort auf die Erkennung des auslösenden Ereignisses, Verbreitung einer Nachricht an die Knoten, die zur Implementierung des Dienstes beitragen, umfassend eine Berechtigung zum Leeren des Inhalts des lokalen Kontos dieser Knoten,
- Hinterlegung einer neuen Bezugstransaktion der Knoten, die ihr lokales Konto geleert haben, in ihrem eigenen lokalen Konto.

11. Verwaltungsverfahren eines verteilten Kontos nach Anspruch 10, bei dem das auslösende Ereignis zu der Anordnung gehört, die unter anderem Folgendes umfasst:
- ein regelmäßiges Zeitintervall,
- den Empfang einer Nachricht, die von mindestens einem der Knoten gesendet wird und eine Berechtigung zum Leeren eines lokalen Kontos anfordert,
- einen Zeitplan,
- eine Anzahl von Transaktionen, die in dem verteilten Konto hinterlegt sind,
- einen Grenzwert für das Speichervolumen,
- eine Aktualisierung der auszuführenden Funktion,
- das Hinzufügen eines Knotens zum Knotensatz,
- das Löschen eines Knotens aus dem Knotensatz,
- das Hinzufügen eines Archivierungsknotens,
- das Löschen eines Archivierungsknotens.

12. Knoten, der zu einem Knotensatz gehört, der zur Implementierung eines Dienstes beiträgt, und der ein lokales Konto umfasst, das mindestens eine erste Transaktion hinterlegt, die Daten umfasst, die bei der Ausführung einer Funktion durch den Knoten erzeugt werden, die zur Implementierung des Dienstes beiträgt, und mindestens einen Parameter, der die Gültigkeit der Transaktion nachweist und es ermöglicht, die erste Transaktion in ein verteiltes Konto hinzuzufügen, das alle Transaktionen, die sich auf die Implementierung des Dienstes beziehen, hinterlegt, wobei der Knoten Mittel für Folgendes umfasst:
- Empfangen einer Nachricht, die eine Berechtigung zum Leeren des Inhalts des lokalen Kontos umfasst, wobei die Nachricht von einem Knoten, dem sogenannten Archivierungsknoten, gesendet wird, der in seinem eigenen lokalen Konto eine Kopie der in dem verteilten Konto gespeicherten Transaktionen hinterlegt,
- vor dem Leeren des lokalen Kontos Speichern einer Kopie eines letzten Status des lokalen Kontos und
- Erzeugen einer zweiten Transaktion, die als Bezugstransaktion für die Transaktionen dient, die nach dem Leeren in dem lokalen Konto hinterlegt werden sollen, wobei die in dieser zweiten Transaktion umfassten Daten von dieser Kopie des letzten Status des lokalen Kontos abhängen.

13. Archivierungsknoten, der in seinem eigenen lokalen Konto eine Kopie eines verteilten Kontos hinterlegt, das alle Transaktionen in Bezug auf einen von einem Knotensatz implementierten Dienst hinterlegt, wobei ein Knoten mindestens eine Funktion ausführt, die zur Implementierung des Dienstes beiträgt, und der ein lokales Konto umfasst, das mindestens eine erste Transaktion hinterlegt, die Daten umfasst, die bei der Ausführung der Funktion erzeugt werden, und mindestens einen Parameter, der die Gültigkeit der Transaktion nachweist und es ermöglicht, die erste Transaktion in das verteilte Konto hinzufügen, wobei der Archivierungsknoten Mittel umfasst, um:
- ein auslösendes Ereignis in Bezug auf das verteilte Konto zu erkennen,
- in Antwort auf die Erkennung des auslösenden Ereignisses, eine Nachricht an die Knoten zu verteilen, die zur Implementierung des Dienstes beitragen, umfassend eine Berechtigung zum Leeren des Inhalts des lokalen Kontos dieser Knoten,
- in seinem eigenen lokalen Konto eine neue Bezugstransaktion der Knoten zu hinterlegen, die ihr lokales Konto geleert haben.

14. Computerprogrammprodukt, das Programmcodeanweisungen umfasst, die bei seiner Implementierung durch einen Prozessor das Verfahren nach Anspruch 1 ausführen.

15. Computerprogrammprodukt, das Programmcodeanweisungen umfasst, die bei seiner Implementierung durch einen Prozessor das Verfahren nach Anspruch 10 ausführen.

## Claims

1. Method for managing a local ledger of a node belonging to a set of nodes contributing to implementation of a service, said local ledger storing at least a first transaction comprising data generated during execution, by said node, of a function contributing to implementation of said service and at least one parameter proving the validity of the transaction and allowing said first transaction to be added to a distributed ledger storing the entirety of the transactions relating to implementation of said service, said method comprising the following steps implemented by said node:
- receiving a message containing an authorization to empty the content of the local ledger, said message being sent by a node, called the archive node, storing in its own local ledger a copy of the transactions recorded in the distributed ledger,
- prior to emptying said local ledger, recording a copy of a last state of the local ledger, and
- generating a second transaction serving as reference transaction for the transactions intended to be stored in the local ledger following emptying, the data comprised in said second transaction being dependent on said copy of the last state of the local ledger.

2. Managing method according to Claim 1, comprising a step of verifying the authenticity of said message containing an authorization to empty the content of the local ledger by means of a reference transaction stored in the distributed ledger, said reference transaction comprising at least one identifier of at least one authorized archive node.

3. Managing method according to Claim 1, comprising a step of sending, to at least one archive node, requesting an authorization to empty a local ledger.

4. Managing method according to Claim 3, wherein said message requesting an authorization to empty a local ledger is sent in response to detection of said local ledger reaching a limit storage volume.

5. Managing method according to Claim 1, wherein the message containing an authorization to empty the content of the local ledger is comprised in a transaction stored in the distributed ledger.

6. Managing method according to Claim 1, further comprising:
- a step of verifying at least one condition of triggering of emptying of said local ledger, implementation of the step of recording a copy of a last state of the local ledger being triggered when said triggering condition is verified.

7. Managing method according to Claim 1, wherein said message containing an authorization to empty the content of the local ledger also contains an identifier of said function.

8. Managing method according to any one of Claims 1 to 3, wherein reception of said message containing an authorization to empty the content of the local ledger triggers execution of an archiving function causing said local ledger to be emptied.

9. Managing method according to Claim 8, wherein said archiving function executed by said node is a smart contract.

10. Method for managing a distributed ledger storing the entirety of the transactions relating to a service implemented by a set of nodes, a node executing at least one function contributing to implementation of said service and comprising a local ledger storing at least a first transaction comprising data generated during execution of said function and at least one parameter proving the validity of the transaction and allowing said first transaction to be added to the distributed ledger, said method comprising the following steps implemented by a node, called the archive node, storing in its own local ledger a copy of the distributed ledger:
- detecting a triggering event relating to the distributed ledger,
- in response to detection of said triggering event, broadcasting, to the nodes contributing to implementation of said service, a message containing an authorization to empty the content of the local ledger of said nodes,
- storing, in its own local ledger, a new reference transaction of nodes having emptied their local ledger.

11. Method for managing a distributed ledger according to Claim 10, wherein the triggering event belongs to the group containing, inter alia:
- a regular time interval,
- reception of a message, sent by at least one of the nodes, requesting an authorization to empty a local ledger,
- a schedule,
- a number of transactions stored in the distributed ledger,
- a limit storage volume,
- an update of the function to be executed,
- addition of a node to the set of nodes,
- deletion of a node from the set of nodes,
- addition of an archive node,
- deletion of an archive node.

12. Node belonging to a set of nodes contributing to implementation of a service and comprising a local ledger storing at least a first transaction comprising data generated during execution, by said node, of a function contributing to implementation of said service and at least one parameter proving the validity of the transaction and allowing said first transaction to be added to a distributed ledger storing the entirety of the transactions relating to implementation of said service, said node comprising means for:
- receiving a message containing an authorization to empty the content of the local ledger, said message being sent by a node, called the archive node, storing in its own local ledger a copy of the transactions recorded in the distributed ledger,
- prior to emptying said local ledger, recording a copy of a last state of the local ledger, and
- generating a second transaction serving as reference transaction for the transactions intended to be stored in the local ledger following emptying, the data comprised in said second transaction being dependent on said copy of the last state of the local ledger.

13. Archive node storing in its own local ledger a copy of a distributed ledger storing the entirety of the transactions relating to a service implemented by a set of nodes, a node executing at least one function contributing to implementation of said service and comprising a local ledger storing at least a first transaction comprising data generated during execution of said function and at least one parameter proving the validity of the transaction and allowing said first transaction to be added to the distributed ledger, said archive node comprising means for:
- detecting a triggering event relating to the distributed ledger,
- in response to detection of said triggering event, broadcasting, to the nodes contributing to implementation of said service, a message containing an authorization to empty the content of the local ledger of said nodes,
- storing, in its own local ledger, a new reference transaction of nodes having emptied their local ledger.

14. Computer program product comprising program code instructions for implementing a method according to Claim 1 when it is executed by a processor.

15. Computer program product comprising program code instructions for implementing a method according to Claim 10 when it is executed by a processor.
